# EUROPÄISCHE PATENTSCHRIFT

(11) **EP 0 844 133 B1**
(45) Veröffentlichungstag und Bekanntmachung des Hinweises auf die Patenterteilung: **11.07.2001**
(21) Anmeldenummer: 97116827.3
(22) Anmeldetag: 27.09.1997
(51) Int. Cl.: B60N 2/12

(54) **Längsverstellvorrichtung an Kraftfahrzeugsitzen für insbesondere zweitürige Kraftfahrzeuge**
Longitudinal adjusting arrangement for vehicle seats, particularly for two door motor vehicles
Dispositif de déplacement longitudinal de sièges de véhicules automobiles en particulier pour véhicules à deux portes

(30) Priorität: 16.11.1996 DE 19647447
(43) Veröffentlichungstag der Anmeldung: 27.05.1998
(73) Patentinhaber: Keiper GmbH & Co., 67657 Kaiserslautern (DE)
(72) Erfinder: Schüler, Rolf, 42579 Heiligenhaus (DE); Flick, Joachim, 42499 Hückeswagen (DE)
(74) Vertreter: Mentzel, Norbert, Dipl.-Phys.

(56) Entgegenhaltungen:
- EP-A- 0 135 596
- DE-A- 1 680 305
- DE-A- 19 541 221
- US-A- 2 796 113
- US-A- 2 850 074
- US-A- 3 931 995

## Beschreibung

Die Erfindung betrifft eine Längsverstellvorrichtung an Kraftfahrzeugsitzen für insbesondere zweitürige Kraftfahrzeuge, wobei die Rückenlehne mit dem Sitzteil über einen gegebenenfalls eine Ver- und Feststelleinrichtung zur Lehnenneigungseinstellung umfassenden Gelenkbeschlag mit einem dem Sitzteil zugehörigen Beschlagteil und einem der Rückenlehne zugeordneten, schwenkbaren Beschlagteil verbunden ist, und einer der Gelenkteile einen Schwenkpunkt aufweist, um den die Rückenlehne nach Lösung einer Arretiereinrichtung vorschwenkbar ist, wobei der Sitzteil an Laufschienen einer Schienenanordnung gehaltert ist, und jede Laufschiene längsverschiebbar in einer Führungsschiene angeordnet und wenigstens eine Laufschiene an der Führungsschiene über ein Federglied im Sinne einer Verschiebung der Laufschiene nach vorn gestützt ist, wobei wenigstens eine Laufschiene eine zur Längsverstellung lösbare Verriegelungseinrichtung aufweist, der eine die Wiederauffindung der eingestellten Sitzlängslage ermöglichende Positioniereinrichtung zugeordnet ist.

Aus der DE 44 23 634 A1 ist eine Längsverstellvorrichtung der eingangs genannten Art bekannt, bei welcher der Positioniereinrichtung eine weitere Sicherungseinrichtung zugeordnet ist, durch welche nach erfolgtem Vorschwenken der Rückenlehne und Vorschieben des Sitzes eine Zurückschwenkung der Rückenlehne in ihre Gebrauchslage solange verhindert ist, bis der Sitz seine zuvor eingestellte Längslage wieder erreicht hat und in dieser Lage verriegelt ist. Diese Vorrichtung erlaubt es nicht, dass ohne vorherige angepasste Einstellung der Sitzlängslage zwischen dem Vordersitz und dem Rücksitz eine Traglast plaziert werden kann und der Vordersitz gleichwohl durch Rückschwenkung der Rückenlehne und deren Verriegelung in eine Gebrauchslage überführbar ist. Abgesehen davon ist der Bauteilaufwand für die Positioniereinrichtung mit der daran gekuppelten Sicherungseinrichtung beträchtlich und verteuert einen mit einer derartigen Einrichtung ausgestatteten Fahrzeugsitz wesentlich.

Dies trifft auch bei der Lösung zu, die aus der EP 0 135 596 B1 ersichtlich ist. Darüber hinaus treten bei dieser Lösung beim Vorschwenken der Rückenlehne und Vorschieben des Sitzes noch zusätzliche Reibungsverluste auf, weil die Laufschiene zweiteilig gestaltet ist und aus einer Vortransportschiene und einer Halteschiene besteht. Für beide gegeneinander verschiebbaren Teile der Laufschiene sind eigene Einrichtungen zur Verbindung der Laufschiene mit der Führungsschiene erforderlich, so dass einerseits eine Sperreinrichtung und andererseits eine Verriegelungseinrichtung Verwendung finden. Dabei ist die Sperreinrichtung mit einem Positionierglied ausgestattet, durch welches die positionierte Verriegelung der Vortransportschiene erst dann bewirkt werden kann, wenn die Rückenlehne ihre Gebrauchsstellung wieder eingenommen hat und bei deren Rückschwenkbewegung die Vortransportschiene wieder in eine parallele Lage zur Halteschiene gelangt ist. Allein die Vortransportschienen auf beiden Sitzlängsseiten tragen sowohl den Sitzteil als auch die Rückenlehne. Das Erfordernis, jedem Teil der Laufschiene, nämlich sowohl der Halteschiene als auch der Vortransportschiene eine eigene Einrichtung zur Längslagenarretierung beizugeben, führt zu einer Vielzahl beträchtlichen Bauraum benötigender Bauteile. Schließlich ist bei diesen beiden vorbekannten Lösungen das Problem einer Vorschubunterstützung beim Einstellen der Sitzlängslage durch Verwendung von Federgliedern nicht angesprochen, wie dies aus der US 3 931 995 ersichtlich ist. Auch wenn dieses Problem bei den oben beschriebenen Lösungen nicht angesprochen worden ist, so sind auch bei diesen Konstruktionen weiteren Bauraum beanspruchende Schraubenfedern zwischen den Führungsschienen und Laufschienen eingesetzt worden.

Aufgabe der Erfindung ist es, eine Längsverstellvorrichtung an Kraftfahrzeugen dahingehend zu verbessern, dass die eingestellte Sitzlängslagenposition auch nach dem Vorschwenken der Rückenlehne und Vorschieben des Sitzes bei der Rückstellbewegung von Rückenlehne und Sitz zu dessen Verriegelung wieder sicher erreicht werden kann, wobei jedoch auch bereits zuvor bei einer hindernisbedingten Zwischenstellung Sitz und Rückenlehne in einer Gebrauchslage verriegelbar sind. Außerdem soll der Bauteilaufwand vermindert und eine kompakte Baueinheit geschaffen werden. Diese Aufgabe ist erfindungsgemäß dadurch gelöst, dass die Positioniereinrichtung eine an einem dem verschiebbaren Sitzteil zugehörigen Bauteil drehbar gelagerte und gegen die Kraft einer Drehfeder aufhebbar feststellbare, einen Anschlag aufweisende Positionierscheibe umfasst, deren Anschlag die Drehbewegung eines die Linearbewegung der Laufschiene gegenüber der Führungsschiene umsetzenden, ebenfalls einen Anschlag aufweisenden Drehgliedes gegebenenfalls unter Zwischenschaltung wenigstens eines Anschlagringes in Bezug auf die Rückschubbewegung des Sitzes begrenzt. Als Bauteile zur Aufnahme der Positionierscheibe kommen in Frage z.B. der Sitzrahmen oder der Sitzhöheneinsteller, in der Regel aber die Laufschiene. Sobald bei dieser Lösung die Positionierscheibe freigegeben ist, was gleichzeitig mit dem Lösen der Verriegelungseinrichtung erfolgt, wird durch die Drehfeder die Positionierscheibe soweit zurückgedreht, dass ihr Anschlag durch den Anschlag des Drehgliedes festgelegt ist, sobald das Drehglied aufgrund der eingestellten Sitzposition nicht mehr bewegt wird. Wenn dann zur Vorschwenkung der Rückenlehne deren Arretiereinrichtung gelöst wird und damit gleichzeitig auch die Verriegelungseinrichtung zur Längsverstellung des Sitzes, so kann außer einer Vorschwenkbewegung der Rückenlehne auch eine Längsverstellung des Sitzes ungehindert erfolgen, da sich der Anschlag des Drehgliedes vom Anschlag der Positionierscheibe weg bewegt. Wird jedoch der Sitz anschließend zurückgeschoben, so findet die Rückschubbewegung dort ihr Ende, wo der Anschlag des Drehgliedes durch den Anschlag der Positionierscheibe zum Stillstand kommt. Damit ist die zuvor eingestellte Sitzlängslage aufgefunden und kann durch die Verriegelungseinrichtung wieder arretiert werden. Allerdings läßt sich die Rückschubbewegung des Sitzes auch bereits vorher unterbrechen und die Rückenlehne zurückschwenken, so dass die Verriegelungseinrichtung bei der dann erreichten Sitzlängslagenposition die Laufschiene gegenüber der Führungsschiene feststellen kann. Diese Lösung gestattet eine kompakte Bauweise mit relativ wenigen Bauteilen.

Zur Festhaltung der Positionierscheibe ist diese vorteilhaft von einem an der Laufschiene gelagerten, im Sperrsinn federbelasteten Arretierhebel feststellbar, der mit einem Auslösebügel für die Verriegelungseinrichtung über einen zusammen mit der Arretiereinrichtung für die Vorschwenkung der Rückenlehne wirkungslos stellbaren Verbindungshebel gekuppelt ist. Dabei weist der Verbindungshebel zur Lösung der Verriegelungseinrichtung vorteilhaft eine Fangnase zum Angriff am Auslösebügel auf und ist mit einem Tastdaumen mittels einer Andruckfeder in Anlage am Lösehebel für die Betätigung des Auslösebügels der Verriegelungseinrichtung gehalten, wobei der Lösehebel über einen Bowdenzug mit der die Vorschwenkung der Rückenlehne ermöglichenden Arretiereinrichtung gekuppelt ist.

Zur Abdeckung eines genügend großen Stellweges für die Längsverstellung des Sitzes bei etwa gleichbleibendem Kraftverlauf weist die auf einer an der Laufschiene fixierten Achse gelagerte Positionierscheibe eine Aussparung zur Aufnahme einer die Drehfeder bildenden Spiralfeder auf, die mit ihrem inneren Ende an der Achse gehaltert ist und deren äußeres Ende am Umfang der Aussparung festgelegt ist, während der Außenumfang der Positionierscheibe als Verzahnung zum Eingriff eines Zahnsegments des Arretierhebels ausgebildet ist und die Positionierscheibe auf einer Stirnseite den Anschlag für die Wiederauffindung der eingestellten Sitzlängslage beim Zurückschieben des Sitzes aufweist.

Eine praktikable Umsetzung der Linearbewegung der Laufschiene in eine Drehbewegung des Drehgliedes läßt sich erzielen, indem auf gleicher Achse der Positionierscheibe eine das Drehglied bildende Wickeltrommel für ein daran befestigtes Zugseil gelagert ist, wobei das freie Ende des Zugseiles an der Führungsschiene oder am Fahrzeugboden festgelegt ist und entweder konzentrisch oder exzentrisch zum Außenmantel der Wickeltrommel in deren Innenraum eine Spiralfeder zur Unterstützung der Vorschubbewegung des Sitzes angeordnet ist, deren inneres Ende in einem Schlitz der Achse befestigt ist, während das äußere Ende der Spiralfeder fest mit der Wickeltrommel verbunden ist und die Wickeltrommel an ihrer der Positionierscheibe zugekehrten Stirnseite einen mit dem Anschlag der Positionierscheibe korrespondierenden Anschlag aufweist. Dabei mögen vorteilhaft zwischen der Wickeltrommel und der Positionierscheibe in Anpassung an den maximalen Verschiebeweg der Laufschiene gegenüber der Führungsschiene einer oder mehrere Anschlagringe angeordnet sein, deren Anschläge in Lage und Dimensionierung mit den Anschlägen der Positionierscheibe einerseits und der Wickeltrommel andererseits korrespondieren und alle Anschläge bei Erreichen der Sitzeinstellposition in einem Anschlagpaket aneinander anliegen.

Das Ziel einer kompakten und platzsparenden Baueinheit lässt sich insbesondere dadurch erreichen, dass die Achse zur Lagerung der Positionierscheibe, der Wickeltrommel und der Anschlagscheiben sowie zur Halterung der Spiralfedern im Zentrum eines Gehäuses angeordnet ist, das an seinem Umfang zwei Ausschnitte aufweist, wovon der eine Ausschnitt dem Durchtritt des die Positionierscheibe festlegenden Armes des Arretierhebels und der andere Ausschnitt dem Durchtritt des Zugseiles dient. Dabei mag das die Positionierscheibe, Wickeltrommel, Anschlagring und Spiralfedern aufnehmende Gehäuse an einer Halteplatte befestigt sein, die auch den Arretierhebel und den Lösehebel auf Zapfen lagert, wobei die Halteplatte mit der Laufschiene fest verbunden ist und eine Abwinklung zur Stützung des Bowdenzuges aufweist.

Die Erfindung ist einem Ausführungsbeispiel auf der Zeichnung dargestellt und wird nachfolgend näher erläutert. Es zeigen:
- Fig. 1: einen schematisch dargestellten Fahrzeugsitz in einer Seitenansicht,
- Fig. 2: ein auf einer Sitzlängsseite angeordnetes Schienenpaar eines die Längsverstellvorrichtung umfassenden Fahrzeugsitzes in einer Seitenansicht von der Sitzinnenseite her gesehen, wobei die Positioniereinrichtung durch eine Abdeckung verkleidet ist,
- Fig. 3: das aus Fig. 2 ersichtliche Schienenpaar mit der Sitzlängsverstellvorrichtung in einer Draufsicht,
- Fig. 4: die aus Fig. 2 ersichtliche Positioniereinrichtung bei abgenommener Verkleidung in gegenüber Fig. 2 vergrößertem Maßstab von der Sitzinnenseite her gesehen,
- Fig. 5: die aus Fig. 4 ersichtliche Positioniereinrichtung in einem Schnitt nach der Linie V - V von Fig. 4,
- Fig. 6: die Verriegelungseinrichtung und das Schienenpaar in einem Querschnitt nach der Linie VI - VI von Fig. 4,
- Fig. 7: die wesentlichen Bauteile der Positioniereinrichtung in perspektivischer Explosionsdarstellung.

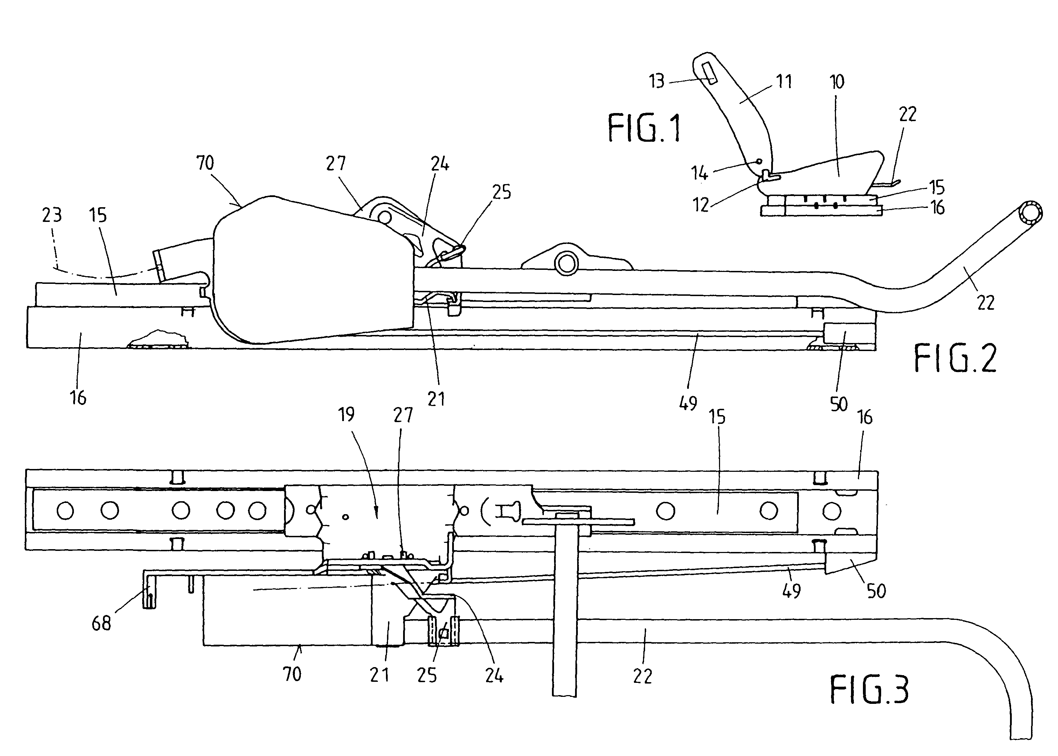

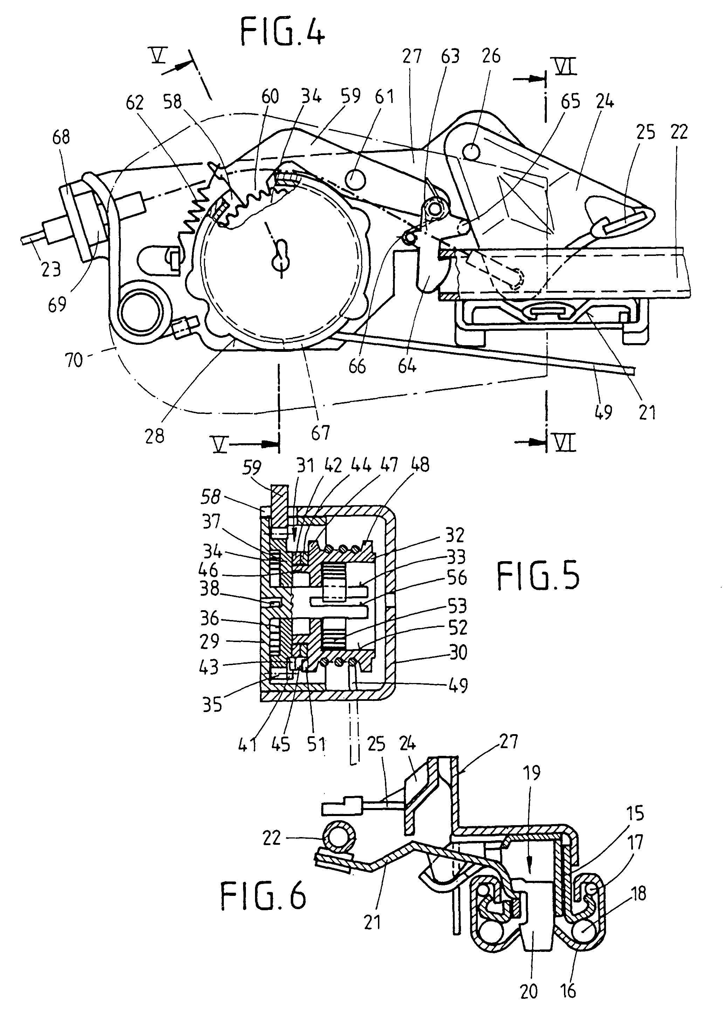

Der in Fig. 1 schematisch dargestellte Fahrzeugsitz besteht aus einem Sitzteil 10 und einer damit über einen nicht dargestellten Gelenkbeschlag neigungseinstellbar verbundenen Rückenlehne 11, die außerdem durch eine mit einer Arretiereinrichtung 12 verbundene Handhabe 13 gegenüber dem Sitzteil 10 um den Schwenkpunkt 14 vorklappbar ist. Der Sitzteil 10 ist mit seiner Unterseite auf beiden Sitzlängsseiten mit einer Laufschiene 15 verbunden, die in eine jeweils am Fahrzeugboden festgelegte Führungsschiene 16 eingreift und an dieser bei dem dargestellten Ausführungsbeispiel über Wälzkörper 17 und 18 längsverschiebbar abgestützt ist, wie dies aus Fig. 6 entnommen werden kann. Die Führungsschiene 16 weist an ihrem aufgewölbten Boden in Längsrichtung hintereinander abstandsweise angeordnete, nicht näher bezeichnete Durchbrüche auf, welche eine Zahnreihe bilden. In diese Durchbrüche greift wenigstens einer von mehreren Sperrklauen 20 ein, die Bestandteil einer an der Laufschiene 15 festgelegten Verriegelungseinrichtung 19 sind, die durch einen ebenfalls an der Laufschiene 15 gelagerten Querhebel 21 gegen Federwirkung lösbar sind, indem ein ebenfalls an der Laufschiene 15 gelagerter Auslösebügel 22 betätigbar ist. Die der Sitzlängsverstelleinrichtung zugehörige Verriegelungseinrichtung 19 ist jedoch auch durch die an der Rückenlehne 11 angeordnete Handhabe 13 zusammen mit der Arretiereinrichtung 12 der Rückenlehne auslösbar, indem über einen Bowdenzug'23 ein Lösehebel 24 betätigbar ist, indem dieser über eine Abwinklung 25 im Lösesinne auf den Auslösebügel 22 und damit auch auf den Querhebel 21 zur Lösung der Sperrklauen 20 aus der Verzahnung der Führungsschiene 16 einwirkt. Der Lösehebel 24 ist mittels eines Zapfens 26 an einer Halteplatte 27 gelagert, die ihrerseits an der Laufschiene 15 festgelegt ist. An dieser Halteplatte 27 ist ebenfalls ein aus einem Gehäuseunterteil 29 und einem Gehäuseoberteil 30 bestehendes Gehäuse festgelegt, welches die Positioniereinrichtung 31 mit einer als Drehglied ausgebildeten Wickeltrommel 32 aufnimmt.

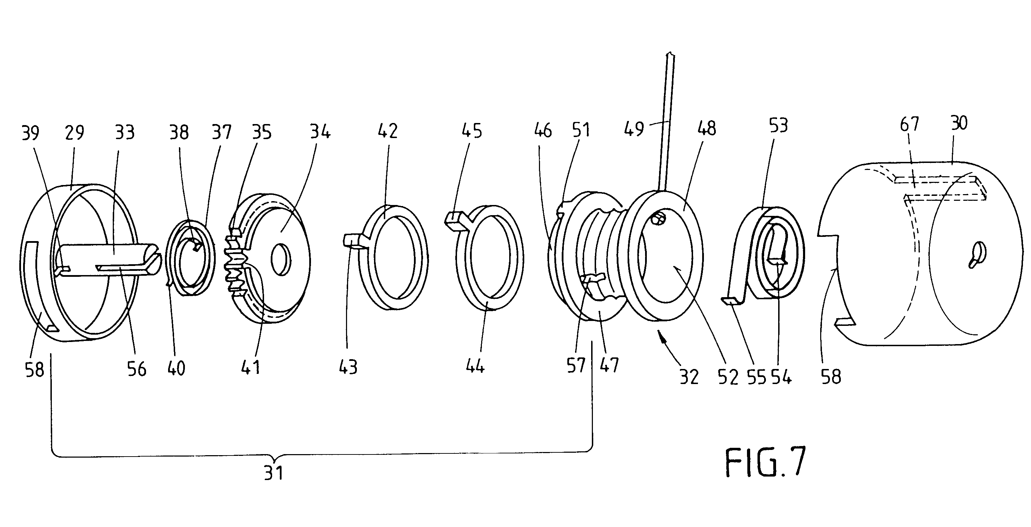

Das Gehäuse 28 der Positioniereinrichtung 31 umfasst bei dem aus den Fig. 5 und 7 ersichtlichen Ausführungsbeispiel ein Gehäuseunterteil 29 und ein die Positioniereinrichtung abdeckendes Gehäuseoberteil 30. Dabei sind die Gehäuseteile 29 und 30 dosenförmig ausgebildet und übergreifen einander. Am Gehäuseunterteil 29, das an der Halteplatte 27 festgelegt ist, befindet sich in dessen Zentrum eine nach innen vorragende Achse 33. Auf dieser Achse ist eine Positionierscheibe 34 drehbar gelagert, die an ihrem gesamten Außenumfang eine Verzahnung 35 aufweist. Auf ihrer dem Boden des Gehäuseunterteiles 29 zugewandten Stirnseite weist diese Positionierscheibe 34 eine Aussparung 36 auf, in welcher eine als Drehfeder fungierende Spiralfeder 37 angeordnet ist, die mit ihrem inneren abgewinkelten Federende 38 in eine Ausnehmung 39 der Achse 33 eingreift, während ihr äußeres Federende in nicht näher dargestellter Weise am Umfang der Aussparung 36 der Positionierscheibe 34 festgelegt ist. An einer Stelle der Positionierscheibe befindet sich auf deren der Aussparung 36 gegenüberliegenden Stirnseite im Bereich der Verzahnung 35 ein aus dieser seitlich vorragender Anschlag 41. Wie aus den Fig. 5 und 7 entnommen werden kann, ist neben der Positionierscheibe 34 koaxial zur Achse 33 ein Anschlagring 42 drehbar angeordnet, dessen zur Seite vorragender Anschlag 43 am Anschlag 41 der Positionierscheibe 34 zur Anlage kommen kann. Neben diesem Anschlagring 42 befindet sich ein weiterer Anschlagring 44, dessen ebenfalls seitlich abragender Anschlag 45 am Anschlag 43 des Anschlagringes 42 zur Anlage kommen kann. Neben dem Anschlagring 44 ist ein die Linearbewegung der Laufschiene 15 in eine Drehbewegung umsetzendes Drehglied angeordnet, das als Wickeltrommel 32 ausgebildet ist. Diese Wickeltrommel 32 ist ebenfalls auf der Achse 33 drehbar gelagert und lagert ihrerseits auf einem Ringansatz 46 die beiden zuvor genannten Anschlagringe 42 und 44. Der Wickelumfang der Wickeltrommel 32 ist beiderseits von Anlaufringen 47 und 48 begrenzt, zwischen denen ein Zugseil 49 aufgewickelt ist, dessen eines Ende an der Wickeltrommel 32 festgelegt ist, während das andere Ende des Zugseiles 49 mittels eines Verbindungsstücks 50 an der Führungsschiene 16 in deren vorderem Bereich befestigt ist. Der den Anschlagringen 42 und 43 benachbarte Anlaufring 47 der Wickeltrommel 32 weist an seiner dem Anschlagring 44 benachbarten Stirnseite im äußeren Umfangsbereich ebenfalls einen mit dem Anschlag 45 des Anschlagringes 44 in Anlage bringbaren Anschlag 51 auf. Im Innenraum 52 der Wickeltrommel 32 ist eine weitere als Spiralfeder 53 ausgebildete Drehfeder angeordnet, deren inneres Federende 54 in einem Schlitz 56 der Achse 33 festgelegt ist, während ihr äußeres Federende 55 in einem Durchbruch 57 im Wickelmantel der Wickeltrommel 32 festgelegt ist. Diese zweite Drehfeder 53 dient dazu die Wickeltrommel 32 unter Spannung zu halten, wodurch auch das Zugseil 49 gespannt ist und versucht den Sitz nach vorn zu schieben.

Sowohl der Gehäuseunterteil 29 als auch der Gehäuseoberteil 30 des Gehäuses 28 weisen jeweils einen miteinander übereinstimmenden Ausschnitt 58 auf, durch welchen ein Arm des Arretierhebels 59 mit seinem Zahnsegment 60 in die Verzahnung 35 der Positionierscheibe 34 eingreifen kann. Dieser Arretierhebel 59 ist mittels eines Zapfens 61 an der Halteplatte 27 schwenkbar gelagert und wird mittels einer an der Halteplatte 27 festgelegten Sperrfeder 62 mit seinem Zahnsegment 60 in Eingriff mit der Verzahnung 35 der Positionierscheibe 34 gehalten. Das andere Ende des Arretierhebels 59 ist drehgelenkig mit einem Verbindungshebel 63 verbunden, der mit einer Fangnase 64 am Auslösebügel 22 angreifen kann, indem die Fangnase 64 bei der dargestellten Ausführungsform in das Ende des rohrförmigen Auslösebügels 22 eingreifen kann. Außerdem weist dieser Verbindungshebel 63 einen Tastdaumen 65 auf, der in Anlage am Lösehebel 24 gehalten ist. Die Aufrechterhaltung der Anlage zwischen dem Tastdaumen 65 und dem Lösehebel 24 erfolgt über eine zwischen den. Arretierhebel 59 und den Verbindungshebel 63 im Uhrzeigerdrehsinn des Verbindungshebels gespannte Andruckfeder 66 z.B. in Form einer Schenkelfeder. Der Gehäuseoberteil 30 des Gehäuses 28 weist neben seinem Ausschnitt 58 einen weiteren Ausschnitt 67 auf, durch welchen das Zugseil 49 die Wickeltrommel 32 verlässt, um über das Verbindungsstück 50 an der Führungsschiene 16 bzw. dem Fahrzeugboden festgelegt werden zu können. Zur Abstützung des Mantels des Bowdenzuges 23 gegenüber der Bowdenzugseele weist die Halteplatte 27 eine Abwinklung 68 auf, an welcher die Stützhülse 69 des Bowdenzuges abgefedert festgelegt ist. Wie insbesondere den Fig. 2 und 3 entnommen werden kann, ist die Positioniereinrichtung 31 zusammen mit dem Arretierhebel 59 und dem Verbindungshebel 63 vollständig von einer Abdeckung 70 übergriffen, die auch den Endbereich des Auslösebügels 22 und Teile des Lösehebels 24 abdeckt.

In den Zeichnungen ist die Verriegelungslage der Laufschiene an der Führungsschiene dargestellt, bei welcher sich der Fahrzeugsitz in einer Lage befindet, dass nach einem Verschwenken der Rückenlehne 11 und damit möglichem Vorschieben des Sitzteiles 10 der Sitz nach dem Besteigen des Fonds wieder in seine zuvor eingestellte Längslage zurückgeschoben werden kann, weil die Positionierscheibe 34 unabhängig von der Rückenlehnenverschwenkung und der Sitzverschiebung ihre Lage beibehalten hat, so dass die ursprünglich eingestellte Anschlagslage wieder aufgefunden wird. Zum vorgenannten Vorschieben des Sitzes ohne Änderung der Einstelllage wird zunächst über die Handhabe 13 die Arretiereinrichtung 12 zum Verschwenken der Rückenlehne gelöst und gleichzeitig erfolgt über den Bowdenzug 23 eine Verschwenkung des Lösehebels 24 im Uhrzeigersinn, so dass bei dieser Schwenkbewegung die Abwinklung 25 am Lösehebel 24 den Auslösebügel 22 niederdrückt, über welchen auch der Querhebel 21 (Fig. 6) entgegen dem Uhrzeigerdrehsinn verschwenkt wird und dadurch die Sperrklauen 20 der Verriegelungseinrichtung 19 aus der Führungsschiene 16 löst, so dass die Laufschiene 15 gegenüber der Führungsschiene 16 nach vorn verschoben werden kann. Gleichzeitig erfolgt jedoch bei der Verschwenkung des Lösehebels 24 auch eine Verschwenkung des Verbindungshebels 63, so dass dessen Fangnase 64 vom Auslösebügel 24 freikommt und bei dessen Niederdrücken die Verbindung mit dem Verbindungshebel 63 gelöst ist, so dass durch die Sperrfeder 62 der Arretierhebel 59 mit seinem Zahnsegment 60 im Eingriff mit der Verzahnung 35 der Positionierscheibe 34 verbleibt, so dass die Spiralfeder 37 festgestellt und der Anschlag 41 der Positionierscheibe 34 ebenfalls unverändert bleibt. Die in rückwärtiger Ausgangslage des Sitzes gespannte Spiralfeder 53 veranlasst die Wickeltrommel 32 zu einer Drehung im Uhrzeigerdrehsinn, wodurch auf das Zugseil 49 eine Zugkraft ausgeübt wird, so dass die Vorschubbewegung des Sitzteiles 10 unterstützt wird. In der vorgeschobenen Lage des Sitzteiles 10 bei nach vorn geklappter Rückenlehne 11 lässt sich der Fond des Kraftfahrzeuges leichter besteigen. Danach kann der Sitz wieder in seine Ursprungslage (bis zum Anschlag 41) zurückgefahren und die Rückenlehne 11 in ihre aus Fig. 1 ersichtliche Gebrauchslage zurückgeschwenkt werden. Sobald die Rückenlehne wieder ihre ursprüngliche Neigungslage einnimmt, wird auch durch die Andruckfeder 66 der Verbindungshebel 63 in die aus Fig. 4 ersichtliche Lage zurückgeschwenkt, bei der auch der Lösehebel 24 wieder die aus Fig. 4 ersichtliche Lage einnimmt. Während des Rücktransportes des Sitzteiles 10 wickelt sich das Zugseil 49 von der Wickeltrommel zumindest teilweise ab und spannt dabei die Spiralfeder 53. Das Sitzteil 10 kann jedoch nur soweit zurückgeschoben werden, bis der Anschlag 51 der Wickeltrommel 32 über die Anschläge 45 und 43 am Anschlag 41 der (vom Arretierhebel 59) festgehaltenen Positionierscheibe 34 zur Anlage kommt. Damit ist der Sitz wieder in die ursprünglich eingestellte Lage zurückgeschoben. Allerdings kann die Rückführungsbewegung des Sitzteiles 10 vorher beendet werden, wobei durch Rückschwenken der Rückenlehne 11 die Belastung des Querhebels 21 durch den Auslösebügel und den Lösehebel 24 entfällt, so dass die federbelasteten Sperrklauen 24 wieder in die Ausnehmungen der Führungsschiene 16 eintreten können und die erreichte Sitzlängslage verriegeln.

Wenn jedoch eine andere als die zuvor eingestellte Sitzlängslagenposition neu wieder auffindbar eingestellt werden soll (reset-position), so ist der Auslösebügel 22 an seinem vorderen Ende hochzuziehen, so dass sein hinteres Ende nach unten verschwenkt und zum einen den Querhebel 21 ebenfalls nach unten drückt und die Sperrklauen 20 aus ihrer Sperrlage an der Führungsschiene 16 löst. Gleichzeitig wird jedoch über den mit dem Auslösebügel 22 im Eingriff befindlichen Verbindungshebel 63 der Arretierhebel 59 im Uhrzeigersinn verschwenkt, so dass sein Zahnsegment 60 gegen die Kraft der Sperrfeder außer Eingriff von der Verzahnung 35 der Positionierscheibe 34 gelangt und die Spiralfeder 37 in der Lage ist durch Drehung der Positionierscheibe 34 deren Anschlag 41 über die Anschläge 43 und 45 der Anschlagringe 42 und 44 dem Anschlag 51 der als Drehglied fungierenden Wickeltrommel 32 nachzuführen, die sich über das Zugseil 49 entsprechend der Verschiebebewegung verdreht. Wenn nun die gewünschte Längslage des Sitzteiles erreicht ist und der Auslösebügel 22 nicht länger betätigt wird und in die aus Fig. 4 ersichtliche Lage zurückgelangt, so zieht die Sperrfeder 62 den Arretierhebel 59 mit seinem Zahnsegment 60 wieder in Eingriff mit der Verzahnung 35 der Positionierscheibe 34. An dieser Stelle ist dann der Anschlag 41 der Positionierscheibe 34 festgelegt, wodurch eine neue Auffindungsposition eingestellt ist. Soll nun entsprechend der zunächst beschriebenen Funktionsweise die Rückenlehne 11 vorgeschwenkt und der Sitzteil 10 wieder vorgeschoben werden, um den Fond des Fahrzeuges zu besteigen, so kann danach der Sitzteil 10 nur bis in die zuvor eingestellte Position maxial zurückgeführt werden. Eine vorherige Unterbrechung der Rückschiebebewegung ist wiederum möglich, wie eben bereits dargelegt wurde.

Wie schon erwähnt, gibt die dargestellte und vorbeschriebene Ausführungsform den Erfindungsgegenstand nur beispielsweise wieder, der keinesfalls allein darauf beschränkt ist. Es sind vielmehr noch weitere Ausgestaltungen und Ausführungsformen des Erfindungsgegenstandes möglich.

### Bezugszeichenliste

- 10: Sitzteil
- 11: Rückenlehne
- 12: Arretiereinrichtung
- 13: Handhabe
- 14: Schwenkpunkt
- 15: Laufschiene
- 16: Führungsschiene
- 17: Wälzkörper
- 18: Wälzkörper
- 19: Verriegelungseinrichtung
- 20: Sperrklaue
- 21: Querhebel
- 22: Auslösebügel
- 23: Bowdenzug
- 24: Lösehebel
- 25: Abwinklung
- 26: Zapfen
- 27: Halteplatte
- 28: Gehäuse
- 29: Gehäuseunterteil
- 30: Gehäuseoberteil
- 31: Positioniereinrichtung
- 32: Drehglied/Wickeltrommel
- 33: Achse
- 34: Positionierscheibe
- 35: Verzahnung
- 36: Aussparung
- 37: Drehfeder/Spiralfeder
- 38: Federende, innen an 37
- 39: Ausnehmung
- 40: Federende, außen an 37
- 41: Anschlag
- 42: Anschlagring
- 43: Anschlag, an 42
- 44: Anschlagring
- 45: Anschlag, an 44
- 46: Ringansatz von 32
- 47: Anlaufring
- 48: Anlaufring
- 49: Zugseil
- 50: Verbindungsstück
- 51: Anschlag, an 47
- 52: Innenraum
- 53: Spiralfeder
- 54: Federende, innen
- 55: Federende, außen
- 56: Schlitz, in 33
- 57: Durchbruch
- 58: Ausschnitt
- 59: Arretierhebel
- 60: Zahnsegment
- 61: Zapfen
- 62: Sperrfeder
- 63: Verbindungshebel
- 64: Fangnase
- 65: Tastdaumen
- 66: Andruckfeder
- 67: Ausschnitt
- 68: Abwinklung
- 69: Stützhülse
- 70: Abdeckung

## Patentansprüche

1. Längsverstellvorrichtung an Kraftfahrzeugsitzen für insbesondere zweitürige Kraftfahrzeuge, wobei eine Rückenlehne (11) mit einem Sitzteil (10) über einen gegebenenfalls eine Ver- und Feststelleinrichtung zur Lehnenneigungseinstellung umfassenden Gelenkbeschlag mit einem dem Sitzteil (10) zugehörigen Beschlagteil und einem der Rückenlehne (11) zugeordneten, schwenkbaren Beschlagteil verbunden ist, und einer der Gelenkteile einen Schwenkpunkt (14) aufweist, um den die Rückenlehne nach Lösung einer Arretiereinrichtung vorschwenkbar ist, wobei der Sitzteil an Laufschienen einer Schienenanordnung (15,16) gehaltert ist und jede Laufschiene (15) längsverschiebbar in einer Führungsschiene (16) angeordnet und wenigstens eine Laufschiene (15) an der Führungsschiene (16) über ein Federglied (37) im Sinne einer Verschiebung der Laufschiene (15) nach vorn abgestützt ist, wobei wenigstens eine Laufschiene (15) eine zur Längsverstellung lösbare Verriegelungseinrichtung (19) aufweist, der eine die Wiederauffindung der eingestellten Sitzlängslage ermöglichende Positioniereinrichtung (31) zugeordnet ist,
**dadurch gekennzeichnet** ,
daß die Positioniereinrichtung (31) eine an einem dem verschiebbaren Sitzteil zugehörigen Bauteil (15) drehbar gelagerte und gegen die Kraft einer Drehfeder (37) aufhebbar feststellbare, einen Anschlag (41) aufweisende Positionierscheibe (34) umfasst, deren Anschlag (41) die Drehbewegung eines die Linearbewegung der Laufschiene (15) gegenüber der Führungsschiene (16) umsetzenden, ebenfalls einen Anschlag (51) aufweisenden Drehgliedes (32) gegebenenfalls unter Zwischenschaltung wenigstens eines Anschlagringes (42 bzw. 44) in Bezug auf die Rückschubbewegung des Sitzes begrenzt.

2. Längsverstellvorrichtung nach Anspruch 1, dadurch gekennzeichnet, dass die Positionierscheibe (34) von einem an der Laufschiene (15) gelagerten, im Sperrsinn federbelasteten Arretierhebel (59) feststellbar ist, der mit einem Auslösebügel (22) für die Verriegelungseinrichtung (19) über einen zusammen mit der Arretiereinrichtung (12) für die Vorschwenkung der Rückenlehne wirkungslos stellbaren Verbindungshebel (63) gekuppelt ist.

3. Längsverstellvorrichtung nach Anspruch 2, dadurch gekennzeichnet, dass der Verbindungshebel (63) eine Fangnase (64) zum Angriff am Auslösebügel (22) aufweist und mit einem Tastdaumen (65) mittels einer Andruckfeder (66) in Anlage am Lösehebel (24) für die Betätigung des Auslösebügels (22) der Verriegelungseinrichtung gehalten ist, wobei der Lösehebel (24) über einen Bowdenzug (23) mit der die Vorschwenkung der Rückenlehne ermöglichenden Arretiereinrichtung (12) gekuppelt ist.

4. Längsverstellvorrichtung nach einem der vorhergehenden Ansprüche, dadurch gekennzeichnet, dass die auf einer an der Laufschiene (15) fixierten Achse (33) gelagerte Positionierscheibe (34) eine Aussparung (36) zur Aufnahme einer die Drehfeder bildenden Spiralfeder (37) aufweist, die mit ihrem inneren Ende an der Achse (33) gehaltert ist und deren äußeres Ende am Umfang der Aussparung (36) festgelegt ist, während der Außenumfang der Positionierscheibe (34) als Verzahnung (35) zum Eingriff eines Zahnsegments (60) des Arretierhebels (59) ausgebildet ist und die Positionierscheibe (34) auf einer Stirnseite den Anschlag (41) für die Wiederauffindung der eingestellten Sitzlängslage beim Zurückschieben des Sitzes aufweist.

5. Längsverstellvorrichtung nach einem der vorhergehenden Ansprüche, dadurch gekennzeichnet, dass auf gleicher Achse (33) der Positionierscheibe (34) eine das Drehglied bildende Wickeltrommel (32) für ein daran befestigtes Zugseil (49) gelagert ist, und das freie Ende des Zugseiles (49) an der Führungsschiene (16) oder am Fahrzeugboden festgelegt ist, wobei konzentrisch oder exzentrisch zum Außenmantel der Wickeltrommel (32) in deren Innenraum (52) eine Spiralfeder (53) angeordnet ist, deren inneres Ende in einem Schlitz (56) der Achse (33) festgelegt ist, während das äußere Ende der Spiralfeder (53) an der Wickeltrommel (32) befestigt ist und die Wickeltrommel (32) an ihrer der Positionierscheibe (34) zugekehrten Stirnseite (47) einen mit dem Anschlag (41) der Positionierscheibe (34) korrespondierenden Anschlag (51) aufweist.

6. Längsverstellvorrichtung nach Anspruch 5, dadurch gekennzeichnet, dass zwischen der Wickeltrommel (32) und der Positionierscheibe (34) in Anpassung an den maximalen Verschiebeweg der Laufschiene (15) gegenüber der Führungsschiene (16) einer oder mehrere Anschlagringe (42, 44) angeordnet sind, deren Anschläge (43, 45) in Lage und Dimensionierung mit den Anschlägen (41, 51) der Positionierscheibe (34) einerseits und der Wickeltrommel (32) andererseits korrespondieren, und alle Anschläge bei Erreichen der vorherigen Sitzeinstellposition in einem Anschlagpaket aneinander anliegen.

7. Längsverstellvorrichtung nach einem der vorhergehenden Ansprüche, dadurch gekennzeichnet, dass die Achse (33) zur Lagerung der Positionierscheibe (34), der Wickeltrommel (32) und der Anschlagringe (42, 44) sowie zur Halterung der Spiralfedern (37, 53) im Zentrum eines Gehäuses (28) angeordnet ist, das an seinem Umfang zwei Ausschnitte (58, 67) aufweist, wovon der eine Ausschnitt (58) dem Durchtritt des die Positionierscheibe (34) festlegenden Armes des Arretierhebels (59) und der andere Ausschnitt (67) dem Durchtritt des Zugseiles (49) dient.

8. Längsverstellvorrichtung nach einem der vorhergehenden Ansprüche, dadurch gekennzeichnet, dass das die Positionierscheibe (34), Wickeltrommel (32), Anschlagringe (42, 44) und Spiralfedern (37, 53) aufnehmende Gehäuse (28) an einer Halteplatte (27) befestigt ist, die auch den Arretierhebel (59) und den Lösehebel (24) auf Zapfen (61 und 26) lagert, wobei die Halteplatte (27) mit der Laufschiene (15) fest verbunden ist und eine Abwinklung (68) zur Stützung des Bowdenzuges (23) aufweist.

9. Längsverstellvorrichtung nach einem der vorhergehenden Ansprüche, dadurch gekennzeichnet, dass die Stützhülse (69) des Bowdenzuges (23) an einer Abwinklung (68) der Halteplatte (27) abgefedert abgestützt ist.

10. Längsverstellvorrichtung nach Anspruch 1, dadurch gekennzeichnet, dass als Federglied im Sinne einer Verschiebung der Laufschiene (15) nach vorn eine Spiralfeder (53) eingesetzt ist.

11. Längsverstellvorrichtung nach Anspruch 10, dadurch gekennzeichnet, dass die Spiralfeder (53) mit ihrem einen Ende der Laufschiene (15) und mit ihrem anderen Ende der Führungsschiene (16) zugeordnet ist und selbstabrollend die Verschiebebewegung des Sitzes unterstützt.

12. Längsverstellvorrichtung nach Anspruch 10, dadurch gekennzeichnet, dass das eine Ende der Spiralfeder (53) ortsfest, mittelbar oder unmittelbar am hinteren Bereich der Laufschiene (15) gehaltert ist und deren anderes Ende an einer an der Laufschiene (15) drehbar gelagerten Wickeltrommel (32) gehaltert ist, an der das eine Ende eines Zugseiles (49) festgelegt ist, dessen anderes Ende am vorderen Bereich der Führungsschiene (16) festgelegt ist.

13. Längsverstellvorrichtung nach Anspruch 12, dadurch gekennzeichnet, dass die Spiralfeder (53) in einem Innenraum (52) der einen konstanten Wickeldurchmesser aufweisenden Wickeltrommel (32) angeordnet ist und mit ihrem inneren Ende an einer der Laufschiene (15) ortsfest zugeordneten Achse (33) angeordnet ist, auf welchem die Wickeltrommel (32) gelagert ist.

14. Längsverstellvorrichtung nach Anspruch 12, dadurch gekennzeichnet, dass die Wickeltrommel (32) einen unkonstanten Wickeldurchmesser aufweist.

15. Längsverstellvorrichtung nach Anspruch 13 oder 14, dadurch gekennzeichnet, dass die Achse (33) fester, zentrischer Bestandteil eines die Wickeltrommel (32) umgreifenden, dosenartigen Gehäuse (28) ist, das an seinem Außenumfang einen Ausschnitt (67) zum Durchtritt des an der Wickeltrommel (32) befestigten Zugseiles (49) aufweist.

16. Längsverstellvorrichtung nach einem der Ansprüche 12 bis 15, dadurch gekennzeichnet, dass die Wickeltrommel (32) an ihrem Innenumfang eine Aufnahme zur Festlegung des äußeren Endes der Spiralfeder (53) aufweist, deren inneres Ende mit einer Abwinklung in einem Schlitz (56) der von der Spiralfeder (53) umfassten Achse (33) eingreift.

17. Längsverstellvorrichtung nach einem der vorhergehenden Ansprüche 12 bis 16, dadurch gekennzeichnet, dass das innere Ende der Spiralfeder (53) an einem auf der Achse (33) oder im Gehäuse (28) drehbar gelagerten, aber fixierbaren Einstellelement festgelegt ist.

## Claims

1. Longitudinal adjustment apparatus for motor vehicle seats of, in particular, two-door motor vehicles, wherein a backrest (11) is connected to a seat part (10) by an articulated fitting, which comprises a fitting part associated with the seat part (10) and a swivelling fitting part associated with the backrest (11) and optionally an adjusting and locking device for setting the inclination of the backrest, and one of the articulated parts has a swivelling point (14), about which the backrest after release of an arresting device is capable of swivelling in a forward direction, wherein the seat part is mounted on sliding rails of a rail arrangement (15, 16) and each sliding rail (15) is disposed in a longitudinally displaceable manner in a guide rail (16) and at least one sliding rail (15) is supported against the guide rail (16) via a spring member (37) in the sense of a displacement of the sliding rail (15) in a forward direction, wherein at least one sliding rail (15) comprises a locking device (19), which is releasable for longitudinal adjustment purposes and with which is associated a positioning device (31), which enables retrieval of the set seat longitudinal position,
**characterized in**
that the positioning device (31) comprises a positioning disk (34), which is rotatably mounted on a component (15) of the displaceable seat part and releasably lockable counter to the action of a torsion spring (37) and comprises a stop (41), which limits the rotary motion of a rotary element (32), which converts the linear motion of the sliding rail (15) relative to the guide rail (16) and likewise comprises a stop (51), in relation to the backward sliding motion of the seat optionally with the interposition of at least one stop ring (42 and/or 44).

2. Longitudinal adjustment apparatus according to claim 1, characterized in that the positioning disk (34) is lockable by an arresting lever (59), which is mounted on the sliding rail (15) and spring-loaded in blocking direction and which is coupled to a release clip (22) for the locking device (19) via a connection lever (63), which together with the arresting device (12) is adjustable without affecting the forward swivelling of the backrest.

3. Longitudinal adjustment apparatus according to claim 2, characterized in that the connection lever (63) comprises a catch lug (64) for acting upon the release clip (22) and is held with a feeler (65) applied by means of a contact pressure spring (66) against the trip lever (24) for actuation of the release clip (22) of the locking device, wherein the trip lever (24) is coupled by a Bowden cable (23) to the arresting device (12), which enables forward swivelling of the backrest.

4. Longitudinal adjustment apparatus according to one of the preceding claims, characterized in that the positioning disk (34), which is mounted on an axle (33) fixed to the sliding rail (15), has a recess (36) for receiving a spiral spring (37) forming the torsion spring, which is held by its inner end on the axle (33) and the outer end of which is fastened to the periphery of the recess (36), while the outer periphery of the positioning disk (34) takes the form of gearing (35) for the meshing of a toothed segment (60) of the arresting lever (59) and the positioning disk (34) on one end face has the stop (41) for retrieval of the set seat longitudinal position as the seat slides back.

5. Longitudinal adjustment apparatus according to one of the preceding claims, characterized in that mounted on the same axle (33) as the positioning disk (34) is a winding drum (32) forming the rotary element for a traction cable (49) fastened thereto, and the free end of the traction cable (49) is fastened to the guide rail (16) or to the vehicle floor, wherein disposed concentrically or eccentrically relative to the outer shell of the winding drum (32) in the interior (52) of the latter is a spiral spring (53), the inner end of which is fastened in a slot (56) of the axle (33), while the outer end of the spiral spring (53) is fastened to the winding drum (32) and the winding drum (32) at its end (47) directed towards the positioning disk (34) has a stop (51) corresponding with the stop (41) of the positioning disk (34).

6. Longitudinal adjustment apparatus according to claim 5, characterized in that one or more stop rings (42, 44) are disposed between the winding drum (32) and the positioning disk (34) by way of adaptation to the maximum displacement distance of the sliding rail (15) relative to the guide rail (16), the stops (43, 45) of which stop rings correspond in their position and dimensions with the stops (41, 51) of the positioning disk (34), on the one hand, and of the winding drum (32), on the other hand, and all of the stops on attainment of the previous seat adjustment position lie adjacent to one another in a stop assembly.

7. Longitudinal adjustment apparatus according to one of the preceding claims, characterized in that the axle (33) for mounting the positioning disk (34), the winding drum (32) and the stop rings (42, 44) as well as for holding the spiral springs (37, 53) is disposed in the centre of a housing (28), which at its periphery has two cutouts (58, 67), of which the one cutout (58) is for passage of the arm of the arresting lever (59) fastening the positioning disk (34) and the other cutout (67) is for passage of the traction cable (49).

8. Longitudinal adjustment apparatus according to one of the preceding claims, characterized in that the housing (28) accommodating the positioning disk (34), winding drum (32), stop rings (42, 44) and spiral springs (37, 53) is fastened to a retaining plate (27), which also supports the arresting lever (59) and the trip lever (24) on journals (61 and 26), wherein the retaining plate (27) is firmly connected to the sliding rail (15) and comprises an angled portion (68) for support of the Bowden cable (23).

9. Longitudinal adjustment apparatus according to one of the preceding claims, characterized in that the supporting sleeve (69) of the Bowden cable (23) is supported in a spring-mounted manner on an angled portion (68) of the retaining plate (27).

10. Longitudinal adjustment apparatus according to claim 1, characterized in that a spiral spring (53) is used as a spring element in the sense of a displacement of the sliding rail (15) in a forward direction.

11. Longitudinal adjustment apparatus according to claim 10, characterized in that the spiral spring (53) is associated by its one end with the sliding rail (15) and by its other end with the guide rail (16) and, as it unwinds, assists the displacement motion of the seat.

12. Longitudinal adjustment apparatus according to claim 10, characterized in that the one end of the spiral spring (53) is held in a stationary manner, indirectly or directly on the rear region of the sliding rail (15) and its other end is held on a winding drum (32), which is rotatably mounted on the sliding rail (15) and fastened to which is the one end of a traction cable (49), the other end of which is fastened to the front region of the guide rail (16).

13. Longitudinal adjustment apparatus according to claim 12, characterized in that the spiral spring (53) is disposed in an interior (53) of the winding drum (32), which has a constant winding diameter, and is disposed with its inner end on an axle (33), which is associated in a stationary manner with the sliding rail (15) and on which the winding drum (32) is mounted.

14. Longitudinal adjustment apparatus according to claim 12, characterized in that the winding drum (32) has a non-constant winding diameter.

15. Longitudinal adjustment apparatus according to claim 13 or 14, characterized in that the axle (33) is a fixed, centrical component of a can-like housing (28), which encompasses the winding drum (32) and has at its outer periphery a cutout (67) for passage of the traction cable (49) fastened to the winding drum (32).

16. Longitudinal adjustment apparatus according to one of claims 12 to 15, characterized in that the winding drum (32) at its inner periphery has a receiver for fastening the outer end of the spiral spring (53), the inner end of which engages with an angled portion in a slot (56) of the axle (33) embraced by the spiral spring (53).

17. Longitudinal adjustment apparatus according to one of the preceding claims 12 to 16, characterized in that the inner end of the spiral spring (53) is fastened to a setting element, which is rotatably mounted on the axle (33) or in the housing (28) but fixable.

## Revendications

1. Dispositif de réglage longitudinal sur des sièges de véhicules automobiles, en particulier pour des véhicules automobiles à deux portes, dans lequel un dossier de siège (11) est relié à une partie de siège (10) via une partie de ferrure comprenant, le cas échéant, un organe de déplacement et de fixation pour le réglage de l'inclinaison du dossier, avec une partie de ferrure appartenant à la partie de siège (10) et une partie de ferrure pivotante associée au dossier de siège (11) et dans lequel l'une des parties d'articulation présente un point d'articulation (14) autour duquel le dossier de siège est susceptible de pivoter préalablement après déverrouillage d'un organe d'arrêt, dans lequel la partie de siège est maintenue sur des rails de déplacement d'un agencement de rails (15, 16) et chaque rail de déplacement (15) est disposé en étant susceptible de coulisser longitudinalement dans un rail de guidage (16) et au moins un rail de déplacement (15) est appuyé sur le rail de guidage (16) via un organe élastique (37) dans le sens d'un coulissement du rail de déplacement (15) vers l'avant, dans lequel au moins un rail de déplacement (15) comporte un organe de verrouillage (19) déverrouillable pour le réglage longitudinal qui est associé à un organe de positionnement (31) permettant de retrouver la position longitudinale réglée du siège,
caractérisé en ce que,
l'organe de positionnement (31) comporte un disque de positionnement (34) monté tournant sur un composant (15) appartenant à la partie de siège coulissant et susceptible d'être fixé et d'être levé à l'encontre de la force de ressort de torsion (37) et présentant une butée (41) qui limite le déplacement de rotation d'un organe tournant (32) présentant également une butée (51) et transformant le déplacement linéaire du rail de déplacement (15) par rapport aux rails de guidage (16), le cas échéant, avec interposition d'au moins une bague de butée (42 ou 44), en relation avec le déplacement en recul du siège.

2. Dispositif de réglage longitudinal selon la revendication 1, caractérisé en ce que le disque de positionnement (34) est susceptible d'être bloqué en position par un levier d'arrêt (59) monté sur le rail de déplacement (15) et sollicité élastiquement dans le sens du blocage, lequel levier d'arrêt est couplé par un étrier (22) de déclenchement pour l'organe de verrouillage (19) par l'intermédiaire d'un levier de liaison (63) susceptible d'être réglé sans action réelle en même temps que l'organe d'arrêt (12) pour le pivotement préalable du dossier de siège.

3. Dispositif de réglage longitudinal selon la revendication 2, caractérisé en ce que le levier de liaison (63) comporte un bec d'accrochage (64) pour l'accrochage à l'étrier de déclenchement (22) et est maintenu par un doigt de palpage (65) au moyen d'un ressort de pressage (66) en position sur le levier de libération (24) pour l'actionnement de l'étrier de déclenchement (22) de l'organe de verrouillage, dans lequel dispositif le levier de libération (24) est couplé par un câble Bowden ou à gaine (23) avec l'organe d'arrêt (12) permettant le pivotement préalable du dossier de siège.

4. Dispositif de réglage longitudinal selon l'une des revendications précédentes, caractérisé en ce que le disque de positionnement (34) monté sur un axe (33) fixe sur l'un des rails de déplacement (15) comporte une cavité (36) destinée à recevoir un ressort spiral (37) constituant le ressort de torsion et qui est retenu sur l'axe (33) par son extrémité intérieure et dont l'extrémité extérieure est fixée à la périphérie de la cavité (36), tandis que la périphérie extérieure du disque de positionnement (34) est réalisée sous la forme d'une denture (35) destinée à engrener avec un segment denté (60) du levier d'arrêt (59), et en ce que le disque de positionnement (34) comporte sur une face frontale la butée (41) pour la récupération de la position longitudinale réglée du siège au cours du coulissement en arrière du siège.

5. Dispositif de réglage longitudinal selon l'une des revendications précédentes, caractérisé en ce que, sur le même axe (33) du disque de positionnement (34), est monté un tambour d'enroulement (32) formant l'organe tournant pour un câble de traction (49) qui y est fixé, et en ce que l'extrémité libre du câble de traction (49) est fixée aux rails de guidage (16) ou au plancher du véhicule, en ce que concentriquement ou de façon excentrique à l'enveloppe extérieure du tambour d'enroulement (32) et dans l'espace intérieur (52) de celui-ci, est disposé un ressort spiral (53) dont l'extrémité intérieure est fixée dans une fente (56) de l'axe (33) tandis que l'extrémité extérieure du ressort spiral (53) est fixée au tambour d'enroulement (32) et que le tambour d'enroulement (32) sur sa face frontale (47) tournée vers le disque de positionnement (34) comporte une butée (51) correspondant à la butée (41) du disque de positionnement (34).

6. Dispositif de réglage longitudinal selon la revendication 5, caractérisé en ce que, entre le tambour d'enroulement (32) et le disque de positionnement (34) en correspondance avec le parcours de coulissement maximal du rail de déplacement (15) par rapport aux rails de guidage (16), sont disposées une ou plusieurs bagues de butée (42, 44), dont les butées (43, 45) correspondent en position et en dimensions avec les butées (41, 51) du disque de positionnement (34) d'une part et du tambour d'enroulement (32) d'autre part, et en ce que toutes les butées, lorsque l'on a atteint la position de réglage de siège précédente, sont disposées l'une sur l'autre en un paquet de butées.

7. Dispositif de réglage longitudinal selon l'une des revendications précédentes, caractérisé en ce que l'axe (33) pour positionner le disque de positionnement (34), le tambour d'enroulement (32) et les bagues de butée (42, 44), ainsi que pour retenir les ressorts spiraux (37, 53), est disposé au centre d'un boîtier (28), qui présente à sa périphérie deux découpes (58, 67) dont l'une découpe (58) sert au passage traversant du bras de levier d'arrêt (59) maintenant fixe le disque de positionnement (34) et dont l'autre découpe (67) sert au passage traversant du câble de traction (49).

8. Dispositif de réglage longitudinal selon l'une des revendications précédentes, caractérisé en ce que le boîtier (28) recevant le disque de positionnement (34), le tambour d'enroulement (32), les bagues de butée (42, 44) et les ressorts spiraux (37, 53), est fixé à une plaque de retenue (27) qui supporte également le levier d'arrêt (59) et le levier de déclenchement (24) sur des broches (61 et 26), en ce que la plaque de retenue (27) est reliée rigidement au rail de déplacement (15) et comporte un pliage (68) pour supporter le câble Bowden ou à gaine (23).

9. Dispositif de réglage longitudinal selon l'une des revendications précédentes, caractérisé en ce que le manchon de support (69) du câble Bowden (23) est en appui sur un pliage (68) de la plaque de retenue (27).

10. Dispositif de réglage longitudinal selon la revendication 1, caractérisé en ce qu'est utilisé comme organe élastique dans le sens d'un coulissement du rail de déplacement (15) vers l'avant, un ressort spiral (53).

11. Dispositif de réglage longitudinal selon la revendication 10, caractérisé en ce que le ressort spiral (53) est associé par l'une de ses extrémités au rail de déplacement (15) et par l'autre extrémité au rail de guidage (16) et assiste par auto-enroulage le déplacement de coulissement du siège.

12. Dispositif de réglage longitudinal selon la revendication 10, caractérisé en ce qu'une extrémité du ressort spiral (53) est retenue localement, indirectement ou directement, à l'extrémité arrière du rail de déplacement (15) et en ce que l'autre extrémité du ressort est retenu sur un tambour d'enroulement (32) monté rotatif sur le rail de déplacement (15) et auquel est fixée l'une des extrémités du câble de traction (49), dont l'autre extrémité est fixée à la zone avant du rail de guidage (16).

13. Dispositif de réglage longitudinal selon la revendication 12, caractérisé en ce que le ressort spiral (53) est disposé dans un espace intérieur (52) du tambour d'enroulement (32) présentant un diamètre d'enroulement constant et est monté par son extrémité intérieure sur un axe (33) lui-même monté localement sur l'un des rails de déplacement (15), et sur lequel est monté le tambour d'enroulement (32).

14. Dispositif de réglage longitudinal selon la revendication 12, caractérisé en ce que le tambour d'enroulement (32) présente un diamètre d'enroulement non constant.

15. Dispositif de réglage longitudinal selon la revendication 13 ou 14, caractérisé en ce que l'axe (33) est un constituant rigide et centrique d'un boîtier (28) en forme de boîte et entourant le tambour d'enroulement (32) et qui comporte à sa périphérie extérieure une découpe (67) pour le passage traversant du câble de traction (49) fixé au tambour d'enroulement (32).

16. Dispositif de réglage longitudinal selon l'une des revendications 12 à 15, caractérisé en ce que le tambour d'enroulement (32) comporte à sa périphérie intérieure une cavité pour fixer l'extrémité extérieure du ressort spiral (53), dont l'extrémité intérieure s'engage par une pliure dans une fente (56) de l'axe (33) entourée par le ressort spiral (53).

17. Dispositif de réglage longitudinal selon l'une des revendications précédentes 12 à 16, caractérisé en ce que l'extrémité intérieure du ressort spiral (53) est fixée à un élément de réglage monté rotatif sur l'axe (33) ou dans le boîtier (28) mais susceptible d'être fixé en position.
